(19) **Europäisches Patentamt / European Patent Office / Office européen des brevets**

(11) **EP 2 584 782 A1**

(12) **EUROPEAN PATENT APPLICATION**
published in accordance with Art. 153(4) EPC

(43) Date of publication:
**24.04.2013 Bulletin 2013/17**

(51) Int Cl.:
***H04N 9/07*** *(2006.01)*

(21) Application number: **11795480.0**

(22) Date of filing: **09.05.2011**

(86) International application number:
**PCT/JP2011/060660**

(87) International publication number:
**WO 2011/158572 (22.12.2011 Gazette 2011/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2010 JP 2010137104**

(71) Applicant: **Sony Corporation
Tokyo 108-0075 (JP)**

(72) Inventors:
• **NOMURA, Yoshikuni
Tokyo 108-0075 (JP)**
• **MITSUNAGA, Tomoo
Tokyo 108-0075 (JP)**
• **ZHANG, Ting
Tokyo 108-0075 (JP)**
• **MATSUSHITA, Nobuyuki
Tokyo 108-0075 (JP)**

(74) Representative: **Ealey, Douglas Ralph et al
D Young & Co LLP
120 Holborn
London EC1N 2DY (GB)**

(54) **IMAGE PROCESSING DEVICE, IMAGE PROCESSING METHOD, AND PROGRAM**

(57) The present invention provides an apparatus and a method to perform an interpolation process of a color mosaic image generated through an imaging process by a single-plate color imaging element. The color mosaic image generated through the imaging process by the single-plate color imaging element is input, estimation is performed for a pixel value low frequency component and a noise high frequency component corresponding to a pixel interpolation position, and calculation for a pixel value at the pixel interpolation position is performed by applying an addition result thereof. An edge-adaptive interpolation processing unit calculates a pixel value at the pixel interpolation position by using a pixel value of a reference pixel located in an edge direction. A blend processing unit calculates a final interpolation pixel value by blending the edge-adaptive interpolation pixel value and the addition result of the pixel value low frequency component and the noise high frequency component corresponding to the pixel interpolation position in accordance with flatness at the pixel interpolation position.

*FIG. 2*

EP 2 584 782 A1

**Description**

TECHNICAL FIELD

The present invention relates to an image processing apparatus, an image processing method, and a program. In particular, the present invention relates to an image processing apparatus, an image processing method, and a program to perform signal processing on output of a single-plate imaging element.

BACKGROUND ART

In an imaging process using a single-plate solid-state imaging element as an imaging element (image sensor) of an imaging apparatus, color imaging is performed by arranging a color filter through which wavelength components of specific colors such as R, G and B corresponding to respective pixels on the imaging element are transmitted. With this method, since only one color (e.g., any of R, G and B) can be obtained for each pixel, an image in a mosaic-like manner corresponding to colors is generated.

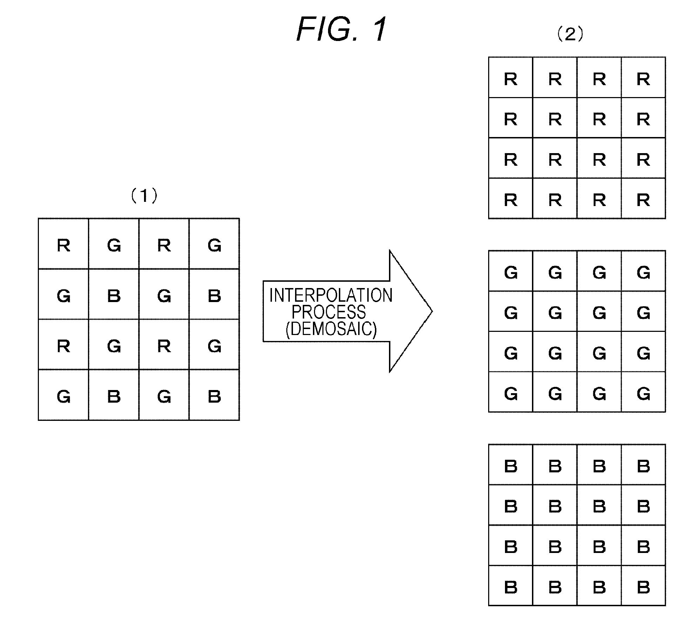

An example of a color filter used for an imaging apparatus is illustrated in Fig. 1(1). This array called Bayer array is permeable for specific wavelength component light (R, G, B) for each pixel unit. In Bayer array, a minimum unit is structured with four pixels having two filters permeable for green (G), one filter permeable for blue (B), and one filter permeable for red (R).

An image obtained through such filters becomes an image having only color information for each pixel in accordance with a filter pattern of R, G, B or the like. The image is called a mosaic image. To generate a color image from the mosaic image, it is required to generate all color information of R, G and B for all pixels.

By performing interpolation at each pixel by using color information obtained from surrounding pixels, a color image can be generated by calculating all color information (e.g., all of R, G and B) corresponding to all pixels. The interpolation process is called a demosaic process. That is, the process to obtain image signals illustrated in Fig. 1(2) by generating color information (R, G and B) for each of all pixel units based on imaging signals of Fig. 1(1) is called an interpolation process, the demosaic process, an up-sampling process, and the like.

As the color interpolation process (demosaic process), a variety of methods have been proposed including Patent Document 1 (USP4642678), for example.

Among the above, a method to interpolate an unknown color using a signal in a direction having high correlation disclosed in Patent Document 2 (USP5652621) and Patent Document 3 (Japanese Patent Application Laid-Open No. 7-236147) has been known as being capable of interpolating accurately even a signal high frequency component.

The traditional processes have been performed based on an implied assumption that noise superimposed to signals is negligible with an excellent S/N ratio of the signals.

However, with recent proceeding of refinement of imaging elements, correlation detection is becoming difficult due to worsening of an S/N of a taken image.

The traditional method using correlation for an image having a poor S/N causes a problem (commonly named as maze artifact) to generate an interpolation pixel value including a high frequency component which is not supposed to exist normally by performing correlation detection with misidentification of noise as a signal at a flat part of the image.

In contrast, when an isotropic linear interpolation process is performed without performing a correlation process at a flat part of the image, the abovementioned problem is not caused. However, through comparison between an imaged pixel and an interpolated pixel, the latter does not include a noise high frequency component. Therefore, the interpolation result becomes visually unnatural. In this manner, with a traditional demosaic process, it is difficult to obtain an interpolation image interpolated into a visually preferable state at a flat part.

Regarding a process to improve image quality at a flat part of an image, a variety of methods have been proposed in an image processing field being different from the demosaic process.

There has been generally known a problem that image zooming causes a defocused image due to shortage of high frequency components at a flat part of the image. For example, Patent Document 4 (Japanese Patent Application Laid-Open No. 2008-263465) proposes a method to generate a natural zoomed image by adding high frequency components to a flat part of the zoomed image by utilizing image fractal nature.

Further, Patent Document 5 (Japanese Patent Application Laid-Open 2007-28348) proposes a method to restore image granularity (high frequency component) which is lost by noise reduction into a natural image by adding high frequency noise afresh after the noise reduction.

Further, Patent Document 6 (Japanese Patent Application Laid-Open 2004-304658) proposes a method to reduce low frequency noise at a flat part of an image to be difficult to recognize by adding noise including a high frequency to the flat part.

As described above, methods to improve image visuality by adding some signals to a flat part of an image have been devised variously. However, those cannot be directly applied to a taken color mosaic image.

In the demosaic process, since a taken pixel value is a true value, it does not need to be varied. Therefore, it is required to estimate only a pixel value at an interpolation pixel position.

Accordingly, in a case of adding noise to a flat part, it is required for natural appearance to add the noise only to the interpolation pixel position and to set the noise to be added to be noise which causes noise amounts included in an imaged pixel and an interpolated pixel to be stochastically equaled in consideration of sensor characteristics.

As described above, to perform interpolation naturally at a flat part in the demosaic process, conditions which have not been considered in the traditional methods need to be considered.

CITATION LIST

PATENT DOCUMENTS

Patent Document 1: US Patent No. 4642678
Patent Document 2: US Patent No. 5652621
Patent Document 3: Japanese Patent Application Laid-Open No. 7-236147
Patent Document 4: Japanese Patent Application Laid-Open No. 2008-263465
Patent Document 5: Japanese Patent Application Laid-Open No. 2007-28348
Patent Document 6: Japanese Patent Application Laid-Open No. 2004-304658

SUMMARY OF THE INVENTION

PROBLEMS TO BE SOLVED BY THE INVENTION

The present invention has been made to address the above issues, for example, and an object thereof is to provide an image processing apparatus, an image processing method, and a program to realize generation of a high-quality color image by accurately performing an interpolation process of a mosaic image taken by a single-plate color imaging element.

An object of an embodiment of the present invention is to provide an image processing apparatus, an image processing method, and a program to generate an interpolation value with which a signal is sufficiently restored from a low frequency component to a high frequency component at an edge and to generate an interpolation value with which sensor noise characteristics are sufficiently restored at a flat part, for example.

The interpolation process on a color mosaic image is required to prepare all colors at all pixel positions of an interpolation image in a visually preferable method. Visual preference at an edge part denotes that signals at all pixel positions at the edge part correctly exist from a low frequency to a high frequency. Visual preference at a flat part denotes that noise characteristics are uniform at all pixel positions at the flat part.

SOLUTIONS TO PROBLEMS

A first aspect of the present invention is an image processing apparatus, including:

a low frequency component calculation processing unit which receives input of a color mosaic image generated through an imaging process by a single-plate color imaging element and which calculates a pixel value low frequency component corresponding to a pixel interpolation position;
a noise estimating unit which receives input of the color mosaic image and which estimates a noise high frequency component corresponding to the pixel interpolation position; and
a blend processing unit which calculates a pixel value at the pixel interpolation position by applying an addition result of the pixel value low frequency component and the noise high frequency component corresponding to the pixel interpolation position.

Furthermore, an embodiment of the image processing apparatus according to the present invention further includes a flat part detecting unit which calculates flatness at the pixel interpolation position; and an edge-adaptive interpolation processing unit which calculates a pixel value at the pixel interpolation position by using a pixel value of a reference pixel located in an edge direction, wherein the blend processing unit calculates a pixel value at the pixel interpolation position by performing a blend process in which the flatness calculated by the flatness detecting unit is set as a blend ratio between the addition result of the pixel value low frequency component and the noise high frequency component corresponding to the pixel interpolation position and the pixel value calculated by the edge-adaptive interpolation unit.

Furthermore, in an embodiment of the image processing apparatus according to the present invention, the flat part detecting unit calculates flatness at the pixel interpolation position by performing comparison between a statistic indicating pixel value distribution in the vicinity of the pixel interpolation position and a previously-defined noise model.

Furthermore, in an embodiment of the image processing apparatus according to the present invention, the flat part detecting unit calculates the flatness at the pixel interpolation position by calculating a pixel value variance as the statistic indicating the pixel value distribution in the vicinity of the pixel interpolation position and comparing the variance with the previously-defined noise model.

Furthermore, in an embodiment of the image processing apparatus according to the present invention, the flat part detecting unit calculates the flatness at the pixel interpolation position by calculating a summation of difference absolute values between pixel value average and pixel values as the statistic indicating the pixel value distribution in the vicinity of the pixel interpolation position and comparing the summation with the previously-defined noise model.

Furthermore, in an embodiment of the image processing apparatus according to the present invention, the flat part detecting unit calculates flatness at the pixel interpolation position based on a difference between a horizontal high frequency component and a vertical high frequency component at a local region in the vicinity of the pixel interpolation position.

Furthermore, in an embodiment of the image processing apparatus according to the present invention, the flat part detecting unit calculates flatness at the pixel interpolation position based on a high frequency component at the pixel interpolation position.

Furthermore, in an embodiment of the image processing apparatus according to the present invention, the edge-adaptive interpolation processing unit calculates the pixel value at the pixel interpolation position with a linear interpolation process using the pixel value of the reference pixel located in the edge direction.

Furthermore, in an embodiment of the image processing apparatus according to the present invention, the noise estimating unit calculates the noise high frequency component at the pixel interpolation position as a value equal to a high frequency component at a pixel position in the vicinity of the interpolation pixel position.

Furthermore, in an embodiment of the image processing apparatus according to the present invention, the noise estimating unit calculates the noise high frequency component at the pixel interpolation position as a value equal to a high frequency component of a pixel selected at random from pixels in the vicinity of the interpolation pixel position.

Furthermore, in an embodiment of the image processing apparatus according to the present invention, the noise estimating unit calculates the noise high frequency component at the pixel interpolation position by using a noise model of the single-plate color imaging element.

Furthermore, in an embodiment of the image processing apparatus according to the present invention, a process to calculate the pixel value at the pixel interpolation position through processes of the low frequency component calculation processing unit, the noise estimating unit, and the blend processing unit is performed on each of a plurality of colors included in the color mosaic image generated through the imaging process by the single-plate color imaging element.

Furthermore, in an embodiment of the image processing apparatus according to the present invention, a high frequency component is calculated for a color having pixel distribution with the highest density among a plurality of colors included in the color mosaic image generated through the imaging process by the single-plate color imaging element, and an interpolation process is performed by using the calculated high frequency component as a high frequency component of another color.

Furthermore, a second aspect of the present invention is an imaging apparatus, including:

an imaging unit including a single-plate color imaging element; and
an image processing unit which receives input of a mosaic image taken by the imaging unit and which performs the imaging process according to any one of the above.

Furthermore, a third aspect of the present invention is an image processing method performed by an image processing apparatus, the method including:

a low frequency component calculation processing step in which a low frequency component calculation processing unit receives input of a color mosaic image generated through an imaging process by a single-plate color imaging element and calculates a pixel value low frequency component corresponding to a pixel interpolation position;
a noise estimating step in which a noise estimating unit receives input of the color mosaic image and estimates a noise high frequency component corresponding to the pixel interpolation position; and
a blend processing step in which a blend processing unit calculates a pixel value at the pixel interpolation position by applying an addition result of the pixel value low frequency component and the noise high frequency component corresponding to the pixel interpolation position.

Furthermore, a fourth aspect of the present invention is a program for causing an image processing apparatus to perform an imaging process, including:

a low frequency component calculation processing step which causes a low frequency component calculation processing unit to receive input of a color mosaic image generated through an imaging process by a single-plate color imaging element and to calculate a pixel value low frequency component corresponding to a pixel interpolation position;

a noise estimating step which causes a noise estimating unit to receive input of the color mosaic image and to estimate a noise high frequency component corresponding to the pixel interpolation position; and

a blend processing step which causes a blend processing unit to calculate a pixel value at the pixel interpolation position by applying an addition result of the pixel value low frequency component and the noise high frequency component corresponding to the pixel interpolation position.

Here, the program of the present invention can be provided to an image processing apparatus and a computer system capable of executing a variety of program codes, for example, by way of a recording medium or a communication medium provided in a computer readable form. By providing such a program in a computer readable form, processes corresponding to the program are realized with the image processing apparatus or the computer system.

Other objects, features, and advantages of the present invention will be further apparent with detailed description based on later-mentioned embodiments of the present invention and attached drawings. Further, a system in the present application is a logical aggregation structure of a plurality of apparatuses and is not limited to an entity having apparatuses of the respective structures accommodated in a single chassis.

EFFECTS OF THE INVENTION

As described above, according to the embodiment of the present invention, it is possible to perform interpolation of a color mosaic image taken by a single-plate color imaging element. Interpolation values with which signals are sufficiently restored from a low frequency component to a high frequency component are generated at an edge part and interpolation values including noise corresponding to sensor noise characteristics are generated at a flat part. According to the processes, a visually preferable interpolation image is generated with occurrence of regular patterns prevented, for example.

Specifically, a color mosaic image generated through an imaging process by a single-plate color imaging element is input, estimation is performed for a pixel value low frequency component and a noise high frequency component corresponding to a pixel interpolation position, and calculation for a pixel value at the pixel interpolation position is performed by applying an addition result thereof. An edge-adaptive interpolation processing unit calculates a pixel value at the pixel interpolation position by using a pixel value of a reference pixel located in an edge direction. A blend processing unit calculates a final interpolation pixel value by blending the edge-adaptive interpolation pixel value and the addition result of the pixel value low frequency component and the noise high frequency component corresponding to the pixel interpolation position in accordance with the flatness at the pixel interpolation position.

According to the processes, a visually preferable interpolation image is generated with occurrence of regular patterns prevented, for example.

BRIEF DESCRIPTION OF DRAWINGS

Figs. 1(1) and 1(2) are explanatory views of a demosaic process.

Fig. 2 is an explanatory diagram of a structure example of an image processing apparatus of the present invention.

Fig. 3 is an explanatory diagram of a hardware structure example of an imaging apparatus being a structure example of the image processing apparatus of the present invention.

Fig. 4 is an explanatory view of an example of a current image in the image processing apparatus of the present invention.

Fig. 5 is an explanatory view of an example of an interpolation process in the image processing apparatus of the present invention.

Fig. 6 is an explanatory view of a first structure example of a flat part detecting unit 101 of the image processing apparatus of the present invention.

Fig. 7 is a view illustrating a part of a current input image of the image processing apparatus of the present invention.

Fig. 8 is an explanatory view of a second structure example of the flat part detecting unit 101 of the image processing apparatus of the present invention.

Fig. 9 is an explanatory view of a third structure example of the flat part detecting unit 101 of the image processing apparatus of the present invention.

Fig. 10 is an explanatory view of a detailed structure example of an embodiment of an edge-adaptive interpolation processing unit 102 of the image processing apparatus of the present invention.

Fig. 11 is a view illustrating a flowchart of an interpolation pixel value calculating process performed by the image processing apparatus of the present invention.

Fig. 12 is a view illustrating an example of a coefficient of a low-pass filter applied to a low frequency component calculation processing unit 103 of the image processing apparatus of the present invention.

Fig. 13 is a view illustrating a first structure example of a noise estimating unit 104 of the image processing apparatus of the present invention.

Fig. 14 is an explanatory view of an example of a coefficient of a high-pass filter used at a high frequency component calculating unit 801 of the noise estimating unit 104.

Fig. 15 is an explanatory view of usage example of a pixel value in an applying process of the high-pass filter illustrated in Fig. 14.

Fig. 16 is a view illustrating a G-pixel position candidate randomly selected at a random selecting unit 802 of the noise estimating unit 104 illustrated in Fig. 13.

Fig. 17 is a view illustrating a second structure example of the noise estimating unit 104 of the image processing apparatus of the present invention.

Fig. 18 is an explanatory view of an example of a coefficient of a high-pass filter used at a noise high frequency component calculating unit 902 in the second structure example of the noise estimating unit 104.

Fig. 19 is a view illustrating an example of a coefficient of a low-pass filter applied to a process to estimate high frequency components of R and B to the vicinity of Nyquist frequency of G using a high frequency component of G.

Fig. 20 is a view illustrating an example of a coefficient of a high-pass filter applied to the process to estimate high frequency components of R and B to the vicinity of Nyquist frequency of G using a high frequency component of G.

MODE FOR CARRYING OUT THE INVENTION

In the following, an image processing apparatus, an image processing method, and a program of the present invention will be described with reference to the drawings. The description will be performed in the following order.

1. Outline of process performed by image processing apparatus of the present invention
2. Structure example of image processing apparatus of the present invention
3. Noise occurring at single-plate color imaging element and interpolation process of the present invention
4. Hardware structure example of image processing apparatus of the present invention
5. Details of processes performed by image processing apparatus of the present invention

(5-1. Flat part detecting unit)
(5-2. Edge-adaptive interpolation processing unit)
(5-3. Low frequency component calculation processing unit)
(5-4. Noise estimating unit)
(5-5. Blend processing unit)

6. Example of adopting, as interpolation processes of pixels of R and B, process different from interpolation process of G pixel
7. Other examples

(7-1. Modified example of filter)
(7-2. Modified example of flatness calculating process)
(7-3. Modified example of noise estimating unit)
(7-4. Modified example of color filter array)
(7-5. Modified example of interpolation process of R and B)

[1. Outline of process performed by image processing apparatus of the present invention]

First, outline of a process performed by the image processing apparatus of the present invention will be described.
The image processing apparatus of the present invention generates a high-quality color image by accurately performing an interpolation process of a mosaic image taken by using a single-plate color imaging element. To achieve the object, the image processing apparatus of the present invention discriminates an attribute of each image region, specifically, discriminates an edge part and a flat part and performs an interpolation method suitable for the edge part and an interpolation method suitable for the flat part.

With the above process, the mosaic image of a color taken by the single-plate color imaging element is interpolated into a visually preferable state. At the edge part, a signal amplitude is dominant compared to a noise amplitude and it is suitable to perform an interpolation process which can restore a signal sufficiently to a high frequency component. In contrast, at the flat part, a noise amplitude is dominant compared to a signal amplitude and it is suitable to perform an interpolation process which can restore noise sufficiently to a high frequency component. For example, in an embodiment of the image processing apparatus of the present invention, a traditional excellent interpolation process is performed at the edge part and an interpolation process to restore a noise high frequency component which is not considered in the traditional process is performed at the flat part.

[2. Structure example of image processing apparatus of the present invention]

As described above, the image processing apparatus of the present invention discriminates the edge part and the flat part and performs interpolation processes suitable respectively thereto. To selectively use the two different interpolation methods, the following processing means are provided.
Regarding an obscure color at each pixel position;

(1) Flat part detecting means which detects a flat part of an image
(2) Low frequency component calculating means which calculates a low frequency component of a pixel value
(3) Noise estimating means which estimates a noise high frequency component
(4) Linear interpolating means along an edge direction (edge-adaptive interpolation processing unit)
(5) Blend means which blends an interpolation pixel value calculated by using (2) and (3) and an interpolation pixel value calculated by using (4) in accordance with flatness calculated by using (1)

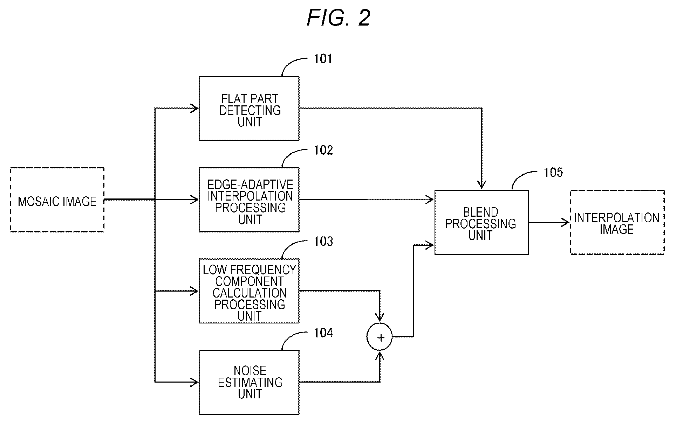

A block diagram of the present invention provided with the above is illustrated in Fig. 2.
A structure example of the image processing apparatus of the present invention will be described by using Fig. 2. The image processing apparatus illustrated in Fig. 2 includes the respective structural elements of the above (1) to (5), that is, a flat part detecting unit 101, an edge-adaptive interpolation processing unit 102, a low frequency component calculation processing unit 103, a noise estimating unit 104, and a blend processing unit 105. The image processing apparatus of the present invention can be realized in various apparatuses such as an imaging apparatus and a PC, for example. The block diagram illustrated in Fig. 2 illustrates elements which perform processes according to the present invention, the elements being extracted from the various apparatuses described above.
Specifically, processes corresponding to the structure illustrated in Fig. 2 can be performed by image processing according to a program previously stored in a memory at a digital signal processor (DSP) of an imaging apparatus, or at a CPU of a PC, for example.
A current image in the image processing apparatus of the present invention is a mosaic image in a color taken by a single-plate color imaging element. In the image, only a pixel value of a specific color such as R, G and B is set at each pixel unit as described above with reference to Fig. 1(1).
The edge-adaptive interpolation processing unit 102 generates an interpolation value which is suitable for an edge part.
An interpolation value which is suitable for a flat part is generated at the low frequency component calculation processing unit 103 and the noise estimating unit 104.
The blend processing unit 105 performs a blend process on the two interpolation results by using flatness calculated by the flat part detecting unit 101. With the above processes, it is possible to obtain an interpolation image as an interpolation result being visually preferable at all interpolation pixel positions. Here, the interpolation image denotes an image in which the respective colors (e.g., R, G and B) are set at all pixel positions.

[3. Noise occurring at single-plate color imaging element and interpolation process of the present invention]

In the image processing apparatus of the present invention, an edge part having large pixel value variation and a flat part having small pixel value variation are discriminated in a current image. At the edge part, a traditional interpolation process is performed. At the flat part, linear interpolation is performed for low frequency components and a process to estimate noise high frequency components is performed for high frequency components.
Reasons for performing the above processes will be described in the following.
Since noise occurring at the single-plate color imaging element occurs independently at each pixel and a noise amount is stochastically fluctuated, it is not possible to acknowledge a noise value at a non-observed pixel position. That is, the mosaic image as the image to be processed can provide only one of colors, for example, of R, G and B for each pixel unit. For example, at an R pixel position of the flat part, although a noise amount corresponding to R can be calculated, noise corresponding to G and B cannot be calculated and is required to be stochastically estimated.

The interpolation process is a process to estimate a pixel value of G or B at an R pixel position, for example. Therefore, only probable noise in a stochastic sense can be estimated as the noise at the interpolation pixel position. Two kinds of methods can be considered as the noise estimation process.
In the following, the description is given on the assumption that a signal at the flat part of the image has only a DC component.

The first noise estimation method is a noise estimation method which utilizes a behavior that image quality is not deteriorated even if pixel values of two imaged pixels are transposed at the flat part.
Since the flat part is an image region where pixel values are not varied and signals are constant at any pixel positions, only noise is varied due to transposing of the pixel values.
Since noise occurs independently at pixels, generation probability is the same for both of the image before transposing of the pixel values and the image after transposing. Accordingly, both of the images are considered to be probable.
When the above concept is utilized, the interpolation process at a flat part becomes a process to select one pixel among imaged pixels and a value thereof is to be used as an interpolation value.

At that time, it is required to perform selection so as not to cause bias of pixel positions selected as interpolation values.
In a case that a pixel value at the same pixel position is continued to be used as the pixel value for a plurality of interpolation positions, values of all interpolated pixels become the same value. Accordingly, there arises a problem of deviating from normal noise probability distribution in addition to causing spatial patterns which are not supposed to exist normally.
It is preferable to randomize the pixel positions selected as the interpolation values to prevent occurrence of the above problem.

The second noise estimation method utilizes a behavior that noise occurring at an imaging element can be modeled in advance. Detailed examination has been made on noise of an imaging element. For example, details are described in the following documents.

[K. Irie et al., "A model for measurement of noise in CCD digital-video cameras", Meas. Sci. Technol. 19, 2008]
[H. Tian, "Noise Analysis in CMOS Image Sensors", Ph. D Thesis, Stanford University, CA, 2000]
[Kazuya Yonemoto, "Foundation and application of CCD/CMOS image sensor", CQ publishing CO., Ltd., 2003]

Details are described in the above documents.

With an imaging element, one noise amount is observed with noise of a plurality of factors added. Regarding the noise after the addition, it has been known that a variance of signal values and noise can be approximated by a linear expression as indicated by expression 1 as described in the following document, for example.
[A. Bosco. et. al., "Signal dependent raw image denoising using sensor noise characterization via multiple acquisitions", IS&T/SPIE Electronic Imaging, 2010]

[Expression 1]

$$V_n(l) = al + b$$

--- Expression 1

In the above expression 1, "1" denotes a signal value, $V_n(1)$ denotes a noise variance, and "a" and "b" denote constants dependent on an imaging element.

Noise of an imaging element has a variance which is calculated according to the above expression 1 in a simplified manner and is modeled as white noise of Gaussian distribution with an average being zero.

To obtain a noise variance by using the above expression 1, a signal value (pixel value) of a current image is required to be acknowledged. Since an expected value of noise is zero, it is possible to acknowledge an approximate signal value by performing averaging sufficient number of pixels at a flat part. In a case that a noise model and a signal value are acknowledged, it is possible to calculate a probable pixel value at the flat part by adding the signal value to noise which is stochastically generated according to the noise model. Accordingly, the pixel value may be used as a pixel value at the interpolation pixel position. For example, it is preferable to use a noise model which is previously obtained as corresponding to the imaging element.

In the description of the above two kinds of methods, it is necessary to note that the description is given on the assumption that a signal at the flat part of the image has only a DC component.

A region where signals have only DC components hardly exists in an actual image. In most cases, texture having a small amplitude mainly with low frequency components exists even at a flat part.

Therefore, when the above two types of methods are directly used, a texture structure is destroyed and a visually unnatural interpolation image is obtained. Here, an image is divided into two bands, i.e., high frequency and low frequency. The linear interpolation is used for interpolation of the low frequency and the above two kinds of methods are used for interpolation of the high frequency. By performing band division, although noise whiteness is slightly worsened in a precise sense, whiteness can be sufficiently maintained in a visual sense. Meanwhile, since low frequency components are dominant for texture at the flat part, sufficient image quality can be obtained with linear interpolation.

The above consideration is summarized as follows.

It is only required to perform linear interpolation for low frequency components and to perform estimation of noise high frequency components for high frequency components at a flat part, while a traditional interpolation process is performed at an edge part. In the following embodiments, description is performed on an example to which a linear interpolation process along an edge direction disclosed in US Patent No. 5652621 and Japanese Patent Application Laid-Open No. 7-236147 described above is applied as an interpolation process to be performed at an edge part.

[4. Hardware structure example of image processing apparatus of the present invention]

In the following, an embodiment of the present invention is described based on the drawings. The embodiment exemplifies an imaging apparatus (digital still camera) in which the present invention is implemented. First, a structure and operation of the overview will be described, and then, a structure and operation of each unit are described. In the end, embodiment variations of the present invention which can be derived from the present embodiment will be described.

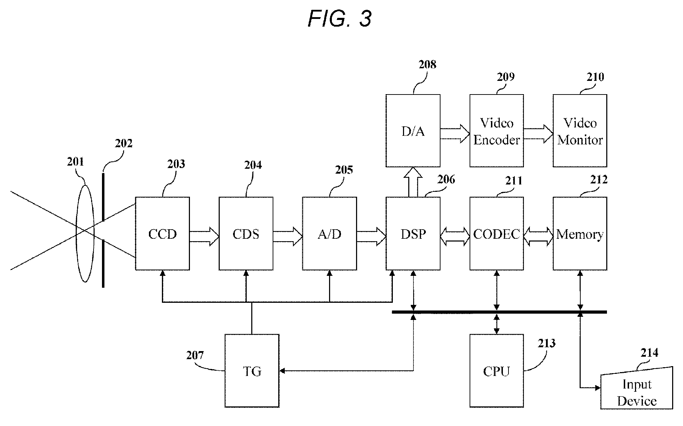

Fig. 3 is a block diagram which illustrates a structure of a digital video camera system being an embodiment of the image processing apparatus of the present invention. As illustrated in Fig. 3, the image processing apparatus is structured with a lens 201, a diaphragm 202, a CCD image sensor 203, a correlated double sampling circuit 204, an A/D converter 205, a DSP block 206, a timing generator 207, a D/A converter 208, a video encoder 209, a video monitor 210, a CODEC 211, a memory 212, a CPU 213, and an input device 214.

The input device 214 includes operational buttons and the like such as a record button arranged at a camera body. Further, the DSP block 206 is a block having a signal processing processor and an image RAM and the signal processing processor is capable of performing previously-programmed image processing on image data stored in the image RAM. Hereinafter, the DSP block is simply called the DSP.

Incident light reaching the CCD 203 after passing through an optical system first arrives at each light-receiving element on a CCD imaging face and is converted into an electric signal through photoelectric conversion at the light-receiving element. Then, after being denoised by the correlated double sampling circuit 204 and digitalized by the A/D converter 205, temporal storage is performed in an image memory in the DSP 206.

In an imaging state, the timing generator 207 controls a signal processing system to maintain image capturing at a constant frame rate. After a pixel stream is transmitted to the DSP 206 as well at a constant rate and appropriate image processing is performed thereat, the image data is transmitted to either or both of the D/A converter 208 and the CODEC 211. The image data transmitted from the DSP 206 is converted into an analog signal by the D/A converter 208 and is converted into a video signal by the video encoder 209 thereafter, and then, the video signal can be monitored on the video monitor 210. The video monitor 210 performs a function of a camera finder in the present embodiment. Further, the CODEC 211 encodes the image data transmitted from the DSP 206 and the encoded image data is to be recorded in the memory 212. Here, the memory 212 may be a recording device or the like using a semiconductor, a magnetic recording medium, a magneto-optical recording medium, an optical recording medium or the like.

The above is the description of the whole system of the digital video camera of the present embodiment. Here, the DSP 206 performs the interpolation process and the like being image processing related to the present invention. In a case of the image processing apparatus being the digital still camera illustrated in Fig. 3, the structure of the image processing apparatus of Fig. 2 corresponds to the processing structure of the DSP 206.

In the following, a processing example performed by the DSP 206 of the image processing apparatus being the digital still camera illustrated in Fig. 3 will be described as an embodiment.

In the DSP 206, a calculating unit is realized to sequentially perform calculation described in a predetermined program code on the stream of input image signals. In the following description, each processing unit in the program is described as a functional block and a sequence of performing the respective processes is described with a flowchart. Here, other than a form of the program to be described in the present embodiment, the present invention may be structured by implementing a hardware circuit which realizes a similar process to the function block described below.

In the present embodiment, the flat part detecting unit 101 in Fig. 2 will be described with the following three different structures.

(a) Structure using a statistic of pixel values

(b) Structure using high frequency components of pixel values in the horizontal direction and the vertical direction

(c) Structure using isotropic high frequency components of pixel values

Further, regarding the noise estimating unit 104 in Fig. 2, description is performed on two different structures which are a structure to estimate a noise high frequency component at an interpolation position by using noise high frequency components of surrounding pixels and a structure to estimate by using a noise model. It is preferable to use a noise model which is previously obtained in accordance with an imaging element, for example.

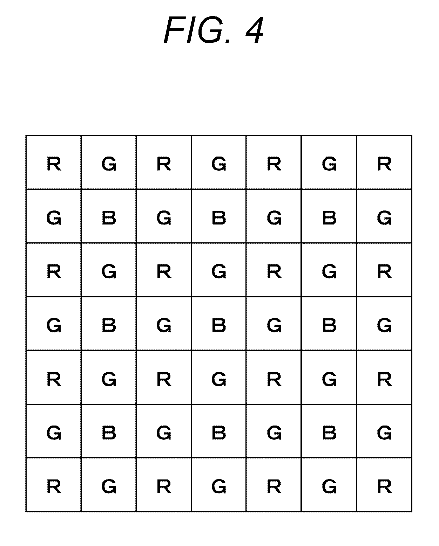

Further, in the embodiment described below, description is performed on an example in which a mosaic image of a color taken by a single-plate color imaging element having a general color filter array illustrated in Fig. 4 is to be processed. The mosaic image illustrated in Fig. 4 is an image similar to the mosaic image described above with reference to Fig. 1(1).

Interpolation can be performed in three colors for each pixel by applying the interpolation process of the present invention separately to the three colors of R, G and B. Accordingly, in the following, an interpolation process of G will be described as a representative example.

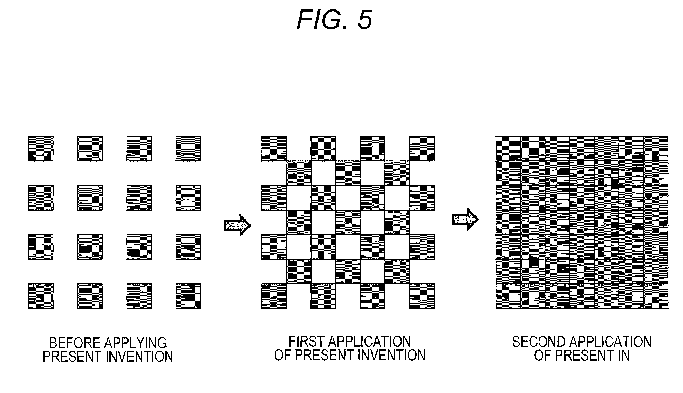

In the color filter array illustrated in Fig. 4, the number of pixels of R and B is only a half of that of G. Here, as illustrated in Fig. 5, it is only required to apply the present invention so that the number of pixels of R and B is to be first doubled and to apply the present invention to the interpolated R and B so that the number of pixels thereof is to be further doubled.

That is, it is only required to perform the process to be applied to G on R and B two times for each. Further, a method to interpolate pixels of R and B with another method by applying the present invention only to G pixels will be described later as another effective method.

[5. Details of processes performed by image processing apparatus of the present invention]

In the following, detailed processes of the respective processing units of the image processing apparatus illustrated in Fig. 2 will be sequentially described.

(5-1. Flat part detecting unit)

The flat part detecting unit 101 calculates flatness of each image region which structures the current image. That is, the flatness (Flatness) indicating a degree of flatness of a local region is calculated.

The flatness (Flatness) being a continuous value from 0 to 1 is a parameter being 1 when the local region is completely flat and being 0 when a large edge exists. The value of the flatness (Flatness = 0 to 1) is output to the blend processing unit 105 to be utilized as a blend ratio.

That is, the flatness (Flatness = 0 to 1) is used as the blend ratio ($\alpha$ = Flatness). For example, the blend processing unit 105 performs processes of multiplying output of the edge-adaptive interpolation processing unit 102 by (1-$\alpha$), multiplying an added value of output of the low frequency component calculation processing unit 103 and output of the noise estimating unit 104 by ($\alpha$), and outputting a result of the blend process to add the two multiplied values as the interpolation pixel value. The processes will be described later.

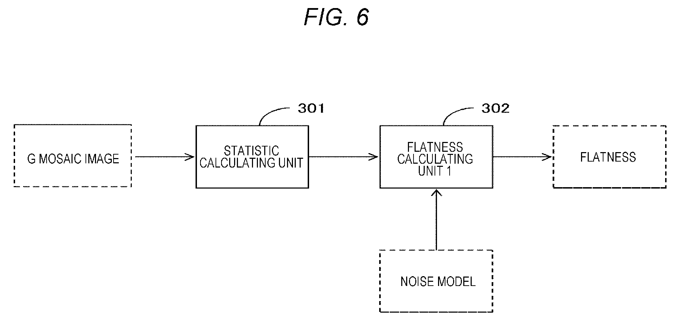

Fig. 6 is a view illustrating a first structure example of the flat part detecting unit 101.

For the local region with the interpolation pixel position being the center, a statistic calculating unit 301 calculates an average and a variance or a variance approximation value as statistic indicating pixel value distribution.

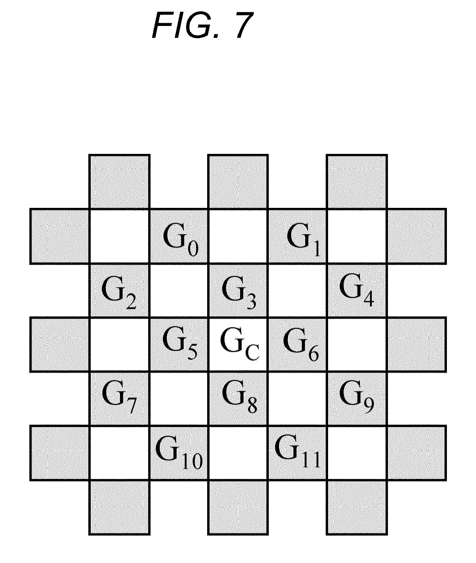

A specific processing example will be described with reference to Fig. 7. Fig. 7 illustrates a part of a current input image. The input image is a mosaic image having a pixel value of only any one of R, G and B at each pixel position. Pixel set positions in the mosaic image are indicated by G0 to G11 illustrated in Fig. 7. The center Gc denotes a pixel position to which a pixel value of a pixel of R or B is set not being a G pixel originally. The interpolation process is a process to calculate a G pixel value of the center and the center pixel position becomes the interpolation pixel position.

An average Ave, a variance Var, and a variance approximation value ApxVar at the position of the interpolation pixel position Gc are obtained by expression 2 indicated below as G0 to 11 denoting imaged G pixel values which exist in the vicinity of Gc.

[Expression 2]

$$Ave = \frac{1}{12} \sum_{i=0}^{i=11} G_i$$

$$Var = \frac{1}{12} \sum_{i=0}^{i=11} (G_i - Ave)^2$$

$$ApxVar = \frac{1}{12} \sum_{i=0}^{i=11} |G_i - Ave|$$

--- Expression 2

In the above expression, "i" denotes a number of a G pixel illustrated in Fig. 7 as satisfying "i = 0 to 11".
The variance approximation value ApxVar is indicated by a summation of difference absolute values between the respective pixel values of G0 to 11 and the average.
The flatness calculating unit 1 302 obtains Vn(Ave) by using a previously prepared noise model (e.g., the above expression 1).
Vn(Ave) indicates a noise variance when the pixel value is Ave. Accordingly, when the local region is flat, Ave becomes a sufficient approximation value of signal values and Var and Vn(Ave) are expected to be approximately equaled. In contrast, when an edge being distinguishable from noise exists at the local region, Var is expected to be extremely different from Vn(Ave).
The flatness calculating unit 1 302 calculates the flatness which indicates how the local region is flat by utilizing the above phenomenon.
An expression to calculate the flatness at Gc is indicated by the following expression 3.
[Expression 3]

$$Flatness = 1 - \min\left( \max\left( \frac{Var}{V_n(Ave)} - 1, \ 0 \right), \ 1 \right)$$

--- Expression 3

A case of using a variance approximation value instead of a variance as a statistic is the same as a case of using the variance except for changing a noise model.
Relation between the signal values and the noise variance is linear as illustrated in Expression 1 described above. However, relation between the signal values and the noise variance approximation value becomes non-linear.
The non-linear relation may be used directly or may be approximated with several pieces of broken lines. Simply, it may be approximated with a single straight line to be linear relation.
By performing the above process at all interpolation pixel positions, flatness can be obtained at all of the interpolation pixel positions.

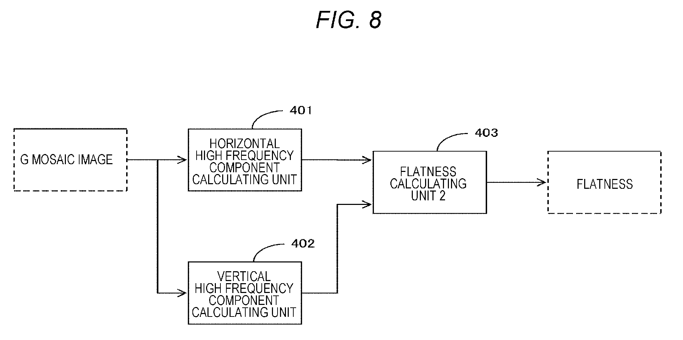

Fig. 8 is a view illustrating a second structure example of the flat part detecting unit 101.
A horizontal high frequency component calculating unit 401 obtains a summation of absolute values of results of a horizontal high-pass filter calculated at a plurality of positions of the local region.
A vertical high frequency component calculating unit 402 obtains a summation of absolute values of results of vertical high-pass filter calculated at a plurality of positions of the local region.
The following expression 4 is an expression to calculate a horizontal high frequency component Hh and a vertical high frequency component Vh at the position of the interpolation pixel position Gc illustrated at the center of Fig. 7.
[Expression 4]

$$H_h = |G_0 - G_1| + |G_2 - G_3| + |G_3 - G_4| + |G_5 - G_6| + |G_7 - G_8| + |G_8 - G_9| + |G_{10} - G_{11}|$$

$$V_h = |G_2 - G_7| + |G_0 - G_5| + |G_5 - G_{10}| + |G_3 - G_8| + |G_1 - G_6| + |G_6 - G_{11}| + |G_4 - G_9|$$

--- Expression 4

When the local region is flat, Hh and Vh include only noise components and Hh and Vh are expected to be approximately equaled.
In contrast, when an edge being distinguishable from noise exists at the local region, Hh and Vh are expected to be extremely different from each other.
A flatness calculating unit 2 403 calculates the flatness which indicates how the local region is flat by utilizing the above phenomenon.
An expression to calculate the flatness at the position of the interpolation pixel position Gc illustrated at the center of Fig. 7 is indicated by the following expression 5.
[Expression 5]

$$Flatness = 1 - \frac{|H_h - V_h|}{H_h + V_h}$$

--- Expression 5

By performing the above process at all of the interpolation pixel positions, flatness can be obtained at all of the interpolation pixel positions.

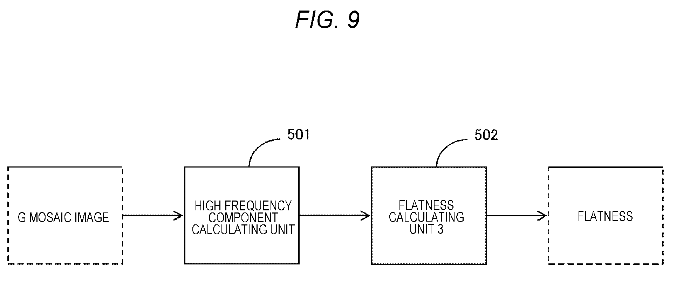

Fig. 9 is a view illustrating a third structure example of the flat part detecting unit 101.
A high frequency component calculating unit 501 obtains a summation of absolute values of results of a high-pass filter calculated at a plurality of positions of the local region.
The following expression 6 is an expression to calculate a high frequency component H at the position of the interpolation pixel position Gc illustrated at the center of Fig. 7.
[Expression 6]

$$H = |G_0 - G_1| + |G_2 - G_3| + |G_3 - G_4| + |G_5 - G_6| + |G_7 - G_8| + |G_8 - G_9| + |G_{10} - G_{11}|$$
$$+ |G_2 - G_7| + |G_0 - G_5| + |G_5 - G_{10}| + |G_3 - G_8| + |G_1 - G_6| + |G_6 - G_{11}| + |G_4 - G_9|$$

--- Expression 6

It is expected that H becomes small when the local region is flat and that H becomes large when an edge being distinguishable from noise exists at the local region.
A flatness calculating unit 3 502 calculates the flatness which indicates how the local region is flat by utilizing the above phenomenon.
An expression to calculate the flatness at the position of the interpolation pixel position Gc illustrated at the center of Fig. 7 is indicated by the following expression 7.
[Expression 7]

$$Flatness = 1 - \min(\max(H - c,\ 0) \times d,\ 1)$$

--- Expression 7

In the above expression 7, "c" and "d" are tuning parameters.

By performing the above process at all of the interpolation pixel positions, flatness can be obtained at all of the interpolation pixel positions.

The structures of the above three different flat part detecting units may be used either separately or concurrently. In a case of using concurrently, it is only required to obtain single flatness Flatness 4 from respective flatness Flatness 1, Flatness 2, and Flatness 3 obtained with the three different structures in accordance with expression 8 indicated below, for example.

[Expression 8]

$$Flatness4 = Flatness1 \times e + Flatness2 \times f + Flatness3 \times g$$

$$\text{--- Expression 8}$$

In the above expression 8, "e", "f" and "g" are arbitrary coefficients of which summation becomes 1.

(5-2. Edge-adaptive interpolation processing unit)

Next, the edge-adaptive interpolation processing unit 102 illustrated in Fig. 2 will be described in detail.

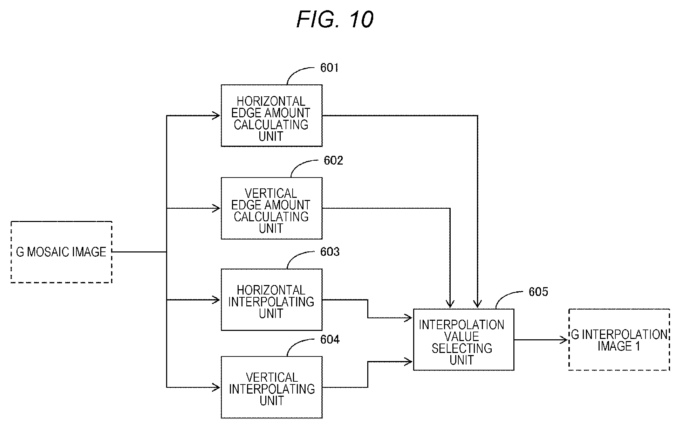

Fig. 10 illustrates a detailed block diagram of an embodiment of the edge-adaptive interpolation processing unit 102. The edge-adaptive interpolation processing unit 102 performs the linear interpolation process along an edge direction at a pixel position at which a G pixel value does not exist in the current mosaic image illustrated in Fig. 4.

It is only required to perform the linear interpolation along a direction toward a small edge amount as the edge amount denoting a variation amount of the pixel values in the horizontal and vertical directions at the interpolation pixel position.

Description is given by using an example to interpolate a G pixel value at the position of the interpolation pixel position Gc illustrated at the center of Fig. 7.

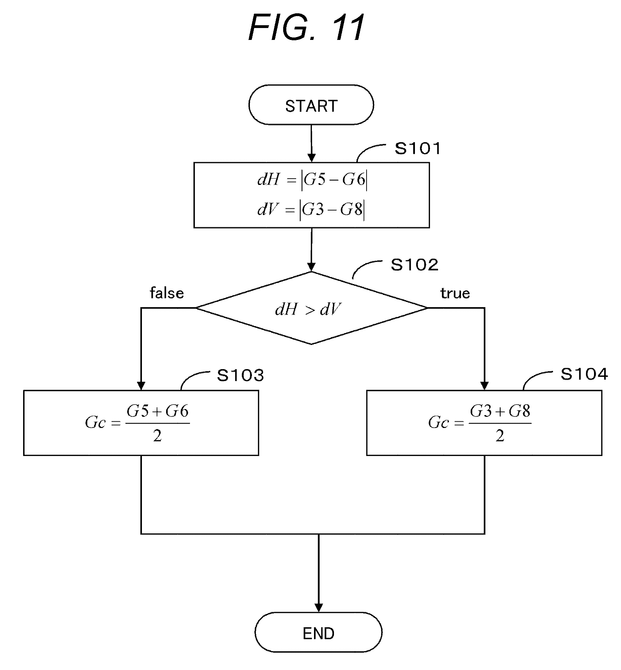

The G interpolation value, that is, the G pixel value, at the position of the interpolation pixel position Gc illustrated at the center of Fig. 7 is obtained in accordance with a flowchart illustrated in Fig. 11.

The following describes correspondence between each process of the flowchart illustrated in Fig. 11 and each block process of the edge-adaptive interpolation processing unit 102 illustrated in Fig. 10.

A horizontal edge amount calculating unit 601 and a vertical edge amount calculating unit 602 of the edge-adaptive interpolation processing unit 102 illustrated in Fig. 10 perform a process of step S101 of the flowchart illustrated in Fig. 11.

An interpolation value selecting unit 605 of the edge-adaptive interpolation processing unit 102 illustrated in Fig. 10 performs a process of step S102 of the flowchart illustrated in Fig. 11.

A horizontal interpolating unit 603 of the edge-adaptive interpolation processing unit 102 illustrated in Fig. 10 performs a process of step S103 of the flowchart illustrated in Fig. 11.

A vertical interpolating unit 604 of the edge-adaptive interpolation processing unit 102 illustrated in Fig. 10 performs a process of step S104 of the flowchart illustrated in Fig. 11.

By performing the processes of steps S101 to S104 of the flowchart illustrated in Fig. 11 at all interpolation pixel positions, it is possible to prepare a G signal respectively at all pixel positions.

The processes illustrated in the flow of Fig. 11 will be described.

A difference absolute value dH between G pixel values G5, G6 horizontally adjacent to the interpolation pixel position Gc illustrated at the center of Fig. 7 and a difference absolute value dV between G pixel values G3, G8 vertically adjacent to the interpolation pixel position Gc are calculated in step S101.

$$dH = |G5-G6|$$

$$dV = |G3-G8|$$

The above values are calculated.

In step S102, the interpolation value selecting unit 605 of the edge-adaptive interpolation processing unit 102 illustrated in Fig. 10 determines whether or not an expression being "dH>dV" is satisfied.

That is, it is determined whether or not the difference absolute value dH between the G pixel values G5, G6 horizontally adjacent to the interpolation pixel position Gc is larger than the difference absolute value dV between the G pixel values G3, G8 vertically adjacent to the interpolation pixel position Gc.

The process proceeds to step S104 when being larger and to step S103 when not being larger.

In a case of being determined as "true" in the determination process in step S102, that is, in a case that the difference absolute value dH between the G pixel values G5, G6 horizontally adjacent to the interpolation pixel position Gc is larger than the difference absolute value dV between the G pixel values G3, G8 vertically adjacent to the interpolation pixel position Gc, an interpolation value at the interpolation pixel position Gc, that is, the G pixel value (Gc) is calculated with the following expression after proceeding to step S104.

$$Gc = (G3+G8)/2$$

Thus, the interpolation value of the interpolation pixel position Gc, that is, the G pixel value (Gc) is calculated with linear interpolation to which the G pixel values G3, G8 vertically adjacent to the interpolation pixel position Gc are applied.

On the other hand, in a case of being determined as "false" in the determination process in step S102, that is, in a case that the difference absolute value dH between the G pixel values G5, G6 horizontally adjacent to the interpolation pixel position Gc is not larger than the difference absolute value dV between the G pixel values G3, G8 vertically adjacent to the interpolation pixel position Gc, the interpolation value at the interpolation pixel position Gc, that is, the G pixel value (Gc) is calculated with the following expression after proceeding to step S103.

$$Gc = (G5+G6)/2$$

Thus, the interpolation value of the interpolation pixel position Gc, that is, the G pixel value (Gc) is calculated with linear interpolation to which the G pixel values G5, G6 horizontally adjacent to the interpolation pixel position Gc are applied.

(5-3. Low frequency component calculation processing unit)

Next, details of the low frequency component calculation processing unit 103 illustrated in Fig. 2 will be described. The low frequency component calculation processing unit 103 calculates, with a low-pass filter, a low frequency component of a G signal in the mosaic image being the current image, for example, at a pixel position at which a G pixel value does not exist in the mosaic image illustrated in Fig. 4.

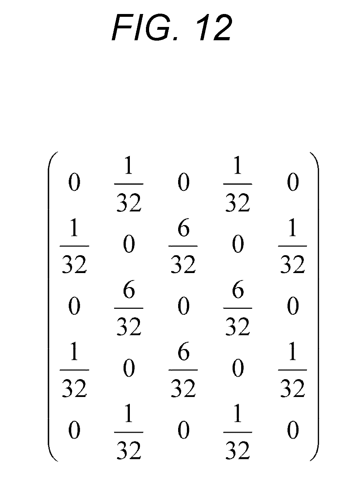

Fig. 12 illustrates an example of a coefficient of the low-pass filter which is applied by the low frequency component calculation processing unit 103.

The low-pass filter illustrated in Fig. 12 is for calculating a low frequency component of a G signal by applying G pixel values included in surrounding 5 by 5 pixels having a pixel position at which a G pixel value does not exist as the center in the mosaic image illustrated in Fig. 4.

To indicate with an expression, an applying process of the low-pass filter illustrated in Fig. 12 is expressed by the following expression 9. The following expression 9 is an expression for calculation of a low frequency component at the position of the center pixel position Gc illustrated in Fig. 7.

expression 9]

$$Gc = (G_0 + G_1 + G_2 + 6G_3 + G_4 + 6G_5 + 6G_6 + G_7 + 6G_8 + G_9 + G_{10} + G_{11})/32$$

$$--- [Expression\ 9]$$

By performing the above process at all interpolation pixel positions, low frequency components of G pixel values at all of the interpolation pixel positions can be calculated.

(5-4. Noise estimating unit)

Next, details of the noise estimating unit 104 illustrated in Fig. 2 will be described.

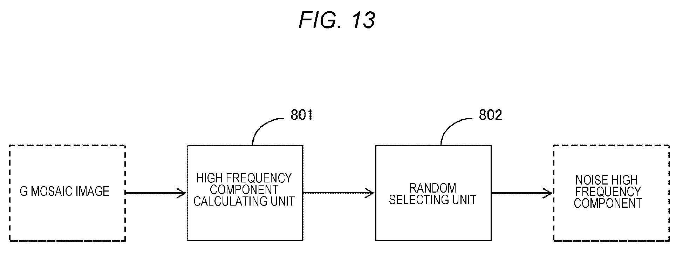

Fig. 13 is a view illustrating a first structure example of the noise estimating unit 104.

A high frequency component calculating unit 801 obtains a high frequency component of a G pixel value of an imaged G pixel position. The high frequency component obtained above is a noise high frequency component when being at a flat part of the image.

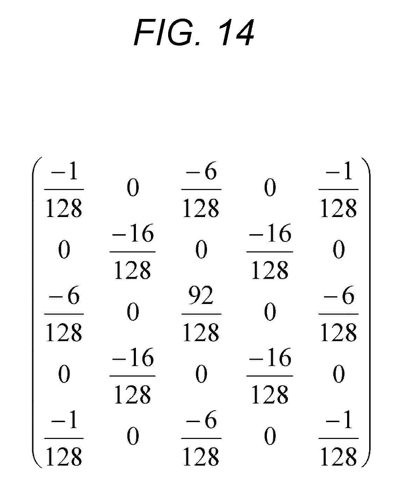

Fig. 14 illustrates an example of a coefficient of the high-pass filter which is used at the high frequency component calculating unit 801.

The high-pass filter illustrated in Fig. 14 is for calculating a high frequency component of a G signal by applying G pixel values included in surrounding 5 by 5 pixels having a pixel position at which a G pixel value does not exist as the center in the mosaic image illustrated in Fig. 4.

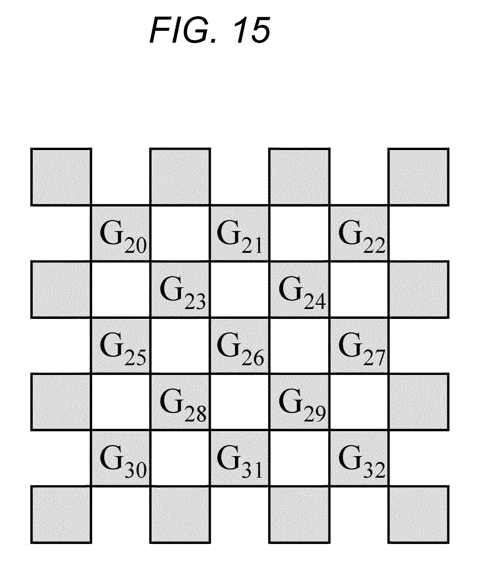

To indicate with an expression, an applying process of the high-pass filter illustrated in Fig. 14 is expressed by the following expression 10. The following expression 10 is an expression for calculation of a high frequency component at a position of a center pixel position G26 illustrated in Fig. 15. The high frequency component at the position of G26 in Fig. 15 is obtained by the following expression 10 as G20 to 32 denoting imaged G pixel values which exist in the vicinity of G26.

[Expression 10]

$$G_H = (-G_{20} - 6G_{21} - G_{22} - 16G_{23} - 16G_{24} - 6G_{25} + 92G_{26} - 6G_{27} - 16G_{28} - 16G_{29} - G_{30} - 6G_{31} - G_{32})/128$$

--- [Expression 10]

By performing the above process at all imaged pixel positions, high frequency components of the G pixel values corresponding to all of the imaged G pixel positions can be calculated.

A random selecting unit 802 of the noise estimating unit 104 illustrated in Fig. 13 selects one point at random among the G pixel positions in the vicinity of the interpolation pixel position in the mosaic image being the current image and estimates that a high frequency component of a G pixel value at the selected position is the noise high frequency component at the interpolation pixel position.

The G pixel position from which the high frequency component is selected is a vicinity region of the interpolation pixel position. The vicinity region of the selected range is called a local region. When the local region is excessively large in size, an assumption of being flat in the region is more unlikely to be satisfied. Accordingly, it is appropriate that the local region is a region on the order of 7 by 7 pixels having the interpolation pixel position as the center.

Here, it is preferable not to select from a proximate vicinity region, that is, 3 by 3 pixels having the interpolation pixel position as the center. This is because, when selected from the proximate vicinity, an unnatural interpolation image having the same value at two continuous pixels may be generated since a G pixel value of the selected pixel and an interpolated G pixel value are approximately equaled.

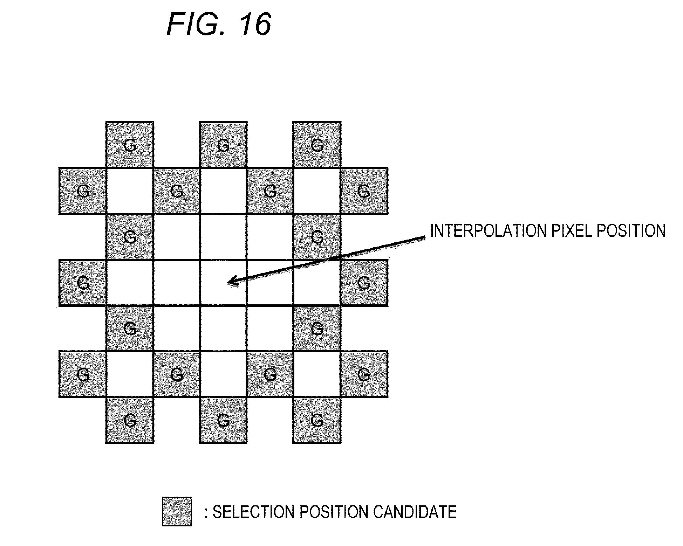

Fig. 16 illustrates candidates of the G pixel position to be selected at random in the above vicinity region. In Fig. 16, the center pixel is the interpolation pixel position and pixel positions described with G at the periphery thereof are candidate positions of the G pixel to be selected for estimating that the high frequency component is the noise high frequency component at the interpolation pixel position.

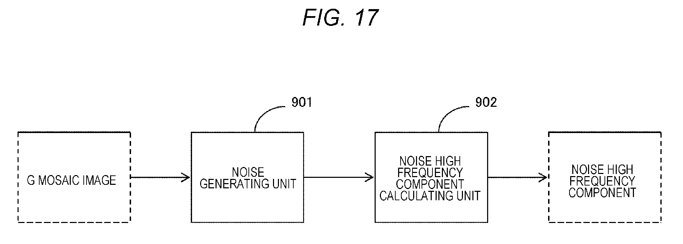

Fig. 17 illustrates a second structure example of the noise estimating unit 104.

A noise generating unit 901 generates a noise image by using a noise model.

The noise model is a noise model previously obtained in accordance with an imaging element, for example, and is a model to obtain a noise variance. An actual noise value is obtained by using the noise variance and a normal random number. Following expression 11 is an expression to calculate a noise value.

[Expression 11]

$$\cdots \cdots = \sqrt{V_n(Ave)} \sqrt{-\ln R_1} \cdot \sin(2\pi R_2)$$

--- Expression 11

In the above expression 11, Vn(Ave) being the same as used in abovementioned expression 3 is the noise variance calculated from the average of the G pixel values of the local region.

R1 and R2 are uniform random numbers distributed as (0, 1]. The uniform random numbers may be calculated with a linear congruent method which is generally known.

The noise high frequency component calculating unit 902 generates a noise high frequency component by applying a high-pass filter to a generated noise image.

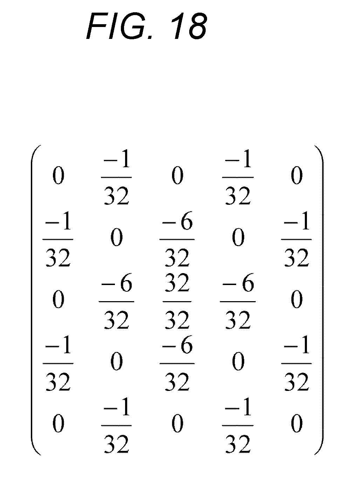

Fig. 18 illustrates an example of a coefficient of the high-pass filter used at the noise high frequency component calculating unit 902.

The high-pass filter illustrated in Fig. 18 is for generating a noise high frequency component as being applied to the noise image generated corresponding to abovementioned expression 11 in a range of 5 by 5 pixels.

As described above, the noise generating unit 901 generates the noise image by using the noise model. The used noise model is a noise model defined by abovementioned expression 1, for example. A G signal value is necessary for using the noise model of expression 1. Here, the low frequency component of the G pixel value at the interpolation pixel position is approximately used as the G signal value. The result of the low frequency component calculation processing unit 103 may be diverted as the low frequency component.

In this manner, it is possible to calculate noise high frequency components corresponding to all of the interpolation pixel positions with the noise estimating unit 104 having the structure of Fig. 13 or Fig. 17.

(5-5. Blend processing unit)

Next, details of the blend processing unit 105 illustrated in Fig. 2 will be described.
The blend processing unit 105 blends an appropriate G interpolation value at an edge part and an appropriate G interpolation value at a flat part having the flatness as an indicator.
Expression of a process of the blend processing unit 105 is expressed by the following expression 12.
[Expression 12]

$$G_{Blend}(x, y) = (G_{Low}(x, y) + G_{Noise}(x, y)) \times Flatness(x, y) + G_{Edge}(x, y) \times (1 - Flatness(x, y))$$

--- Expression 12

In the above expression 12, (x, y) indicates a pixel position to be interpolated, GEdge(x, y) indicates an appropriate G interpolation value at an edge part obtained by the edge-adaptive interpolation processing unit 102, GLow(x, y) indicates a low frequency component of an appropriate G interpolation value at a flat part obtained by the low frequency component calculation processing unit 103, GNoise(x, y) indicates a high frequency component of an appropriate G interpolation value at the flat part obtained by the noise estimating unit 104, and Flatness (x, y) indicates flatness obtained by the flat part detecting unit 101.
Since the G signal blended at the interpolation pixel position as described above has a signal sufficient high frequency component at an edge part and has a sufficient noise high frequency component at a flat part, it is possible to obtain a visually natural interpolation image.
According to the above embodiment, in the mosaic image taken in accordance with the color filter array illustrated in Fig. 4, the interpolation process can be performed on G pixel values. That is, it is possible to calculate the G pixel values which correspond to all pixel positions.
Further, similarly to the abovementioned interpolation process of G pixels, it is possible to perform interpolation processes of R and B.
According to the processes, it is possible to generate an interpolation image in which all pixel values of R, G and B corresponding to all pixels are set.

[6. Example of adopting, as interpolation processes of pixels of R and B, process different from interpolation process of G pixel]

It is possible to perform interpolation processes of R and B similarly to the abovementioned interpolation process of G pixels. Here, as another effective method, description will be performed on a method to interpolate pixels of R and B with another method while applying the present invention only to G pixels.
In a case that the abovementioned interpolation process of G pixels is used for interpolation of R and B, aliasing occurs when a signal exceeding Nyquist frequency of R and B is input.
Then, to suppress aliasing of R and B, a process being different from the G pixel interpolation process is applied to the interpolation process of pixels of R and B. Specifically, as illustrated in Fig. 4, high frequency components of R and B are estimated to the vicinity of Nyquist frequency of G by using a high frequency component of G having doubled pixels compared to R and B.
That is, high frequency components of a color having pixel distribution with the highest density are calculated among a plurality of colors included in a color mosaic image and an interpolation process to estimate high frequency components of other colors is performed from the calculated high frequency components.
Such a concept of suppressing aliasing is traditionally used as a part of a demosaic process. Estimation value RE, BE of signals of R and B restored to a high frequency can be obtained in accordance with expression 13 indicated below as GH denoting a high frequency component of a G signal at a noted pixel position and RL and BL respectively denoting low frequency components of signals of R and B.
[Expression 13]

$$R_E = kG_H + R_L$$
$$B_E = lG_H + B_L$$

--- Expression 13

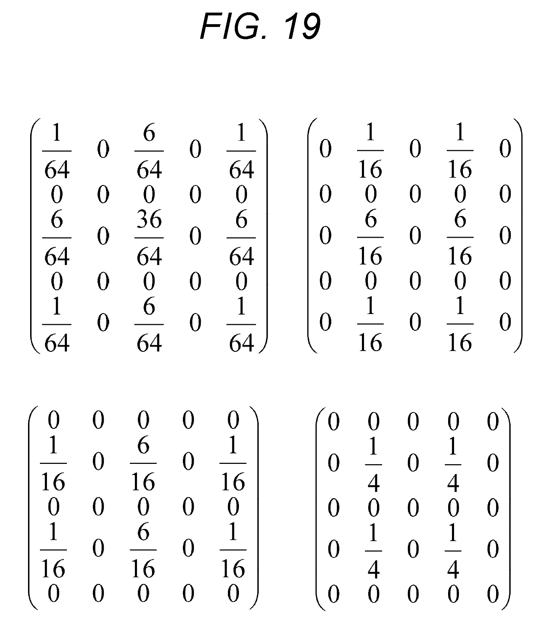

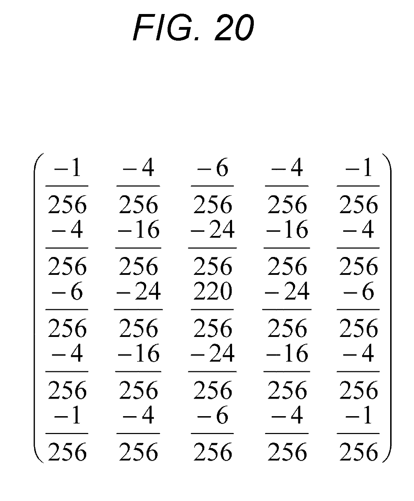

In the above expression 13, "k" and "l" are coefficients being varied in accordance with an estimation method. Simply, it is only required to set as "k = l = 1". RL and BL can be calculated by applying a low-pass filter to a color mosaic image. For example, it is only required to use as selecting an appropriate one in accordance with a phase of a noted pixel among coefficients of four low-pass filters illustrated in Fig. 19.
GH can be calculated by applying a high-pass filter to G signals prepared for all pixel positions according to the present invention. For example, it is only required to calculate by using a coefficient of a high-pass filter illustrated in Fig. 20.

Compared to a case that the present invention is applied to R and B, with the signals of R and B interpolated as described above, interpolation values in which signals of R and B are correctly restored from a low frequency component to a high frequency component are generated at an edge part.

Compared to a case that the present invention is applied to R and B, the signals of R and B interpolated as described above becomes more likely to have single color noise as noise being uniformed in color at a flat part due to a close correlation between a noise high frequency component of G and noise high frequency components of R and B. In a case that noise at a flat part is not correlative among R, G and B, noise becomes to have various colors depending on pixel positions. In general, single color noise is more preferable in a visual sense.

[7. Other examples]

In the following, modifiable points in the abovementioned embodiments will be described.

(7-1. Modified example of filter)

In the abovementioned embodiment, the signal processing is performed by using a variety of filters such as the high-pass filter and the low-pass filter. Here, the embodiment simply describes examples of a size, a shape and a coefficient of the filter. It is also possible to adopt a size, a shape and a coefficient which are different therefrom.

(7-2. Modified example of flatness calculating process)

Modification as described below may be performed also on the process of the flat part detecting unit 101 which calculates the flatness of each image region structuring the process target image.
In the flatness calculating unit 1 302 of the first structure example of the flat part detecting unit 101 described with reference to Fig. 6, abovementioned expression 3 is adopted as the calculation process of the flatness (Flatness) indicating a degree of flatness of a local region. Here, it is also possible to use an expression indicated below, for example, which is different from expression 3.
The flatness (Flatness) indicating a degree of flatness of a local region may be calculated in accordance with expression 14 indicated below instead of abovementioned expression 3.

[Expression 14]

$$Flatness = 1 - \min(\max(Var - V_n(Ave),\ 0) \times m,\ 1)$$

--- Expression 14

In the above expression 14, "m" is a tuning parameter. Expression 3 and expression 14 are just examples and any formula may be adopted as long as being an expression to compare a noise model and an actually-measured statistic.

Further, in the flatness calculating unit 1 302 described in the second structure example of the flat part detecting unit 101 described with reference to Fig. 8, abovementioned expression 5 is adopted as the calculation process of the flatness (Flatness) indicating a degree of flatness of a local region. That is, calculation of the flatness (Flatness) indicating a degree of flatness of a local region is performed by using the horizontal high frequency component Hh and the vertical high frequency component Vh.

The flatness (Flatness) indicating a degree of flatness of a local region may be calculated by using expression 15 indicated below instead of abovementioned expression 5.

$$ Flatness = 1 - \min\left( \left| H_h - V_h \right| \times n, \ \ 0 \right) $$

--- Expression 15

In the above expression 15, "n" is a tuning parameter.
Any formula other than abovementioned expression 15 may be adopted as long as being an expression to calculate a comparison result between magnitude of a horizontal high frequency component and magnitude of a vertical high frequency component. Further, in expression 5 and expression 15, only two directions being horizontal and being vertical are considered. Here, it is also possible to calculate the flatness by using more number of directions such as further considering an oblique direction.

(7-3. Modified example of noise estimating unit)

Next, a modified example of the noise estimating unit 104 will be described.
Regarding the noise estimating unit 104 which estimates a noise high frequency component, in the first structure example described above with reference to Fig. 13, description is performed on the method to select one point at random among imaged pixel positions existing in the vicinity of the interpolation pixel position.

That is, the random selecting unit 802 of the noise estimating unit 104 illustrated in Fig. 13 selects one point at random among the G pixel positions in the vicinity of the interpolation pixel position in the mosaic image being the current image and estimates that a high frequency component of a G pixel value at the selected position is the noise high frequency component at the interpolation pixel position. A specific example of candidates of the G pixel position to be selected at random includes positions illustrated in Fig. 16.

Such setting of the pixel position for estimating a noise high frequency component at the interpolation pixel position may be performed as selecting not at random but from fixed relative positions which are sufficiently apart. For example, it is a process to invariably select an image pixel position at (x+10, y+11) when the interpolation pixel position is at (x, y).

By performing such a process, there occurs no problem of appearing of a specific pattern. This is because human eyes cannot perceive spatial correlation of noise high frequency components which are sufficiently distanced.

Further, in the abovementioned embodiment, description is performed on the example using the isotropic high-pass filer as the high-pass filter used at the high frequency component calculating unit 801 in the first structure example described above with reference to Fig. 13. That is, the filter is illustrated in Fig. 14.

Not limited to such an isotropic high-pass filter, it is also possible to have setting to obtain a high frequency component by subtracting a G pixel value having a non-isotropic edge preserving smoothing process be performed from an original signal, for example, by applying a filter such as a bilateral filter as the high-pass filter to be used at the high frequency component calculating unit 801. By applying such a filter, it is possible to obtain a more accurate estimation value of a noise high frequency component at a flat part in the vicinity of an edge.

Further, as described above, regarding the noise estimating unit 104 which estimates a noise high frequency component, in the first structure example described above with reference to Fig. 13, description is performed on the method to select one point at random among imaged pixel positions existing in the vicinity of the interpolation pixel position. Regarding the random selection process, it is also possible to be configured to perform a reselection process to reselect another vicinity pixel position in a case that the low frequency component at the interpolation pixel position and a low frequency component at a vicinity pixel position selected by random selection are extremely different through comparison therebetween. By performing such a reselection process, it is possible to obtain a more accurate estimation value of a noise high frequency component at a flat part in the vicinity of an edge.

Further, regarding the noise estimating unit 104 which estimates a noise high frequency component, in the second structure example described above with reference to Fig. 17, description is performed on the example in which a low frequency component of a G pixel value calculated by using an isotropic low-pass filter is used as an approximation value of a G signal value to be used for a noise model.

That is, as described above, in the second structure example described above with reference to Fig. 17, the noise generating unit 901 generates the noise image by using the noise model. A noise model defined by the above expression 1, for example, is used as the noise model to be used. To use the noise model of expression 1, a G signal value is required. Here, a low frequency component of the G pixel value at the interpolation pixel position is approximately used as the G signal value. The low frequency component can be calculated by performing the same process as the above-described low frequency component calculation processing unit 103. An example of a coefficient of the low-pass filter applied to the low frequency component calculation processing unit 103 is as described above with reference to Fig. 12.

Not limited to the setting described above, it is also possible to have setting to calculate a low frequency component of a G pixel value by using the G pixel value having a non-isotropic edge preserving smoothing process be performed, for example, by applying a filter such as a bilateral filter as the filter for calculating the low frequency component of the G pixel value. Through usage of such a filter, it is possible to obtain a more accurate approximation value of a signal value at a flat part in the vicinity of an edge.


(7-4. Modified example of color filter array)


In the abovementioned embodiment, description is performed on a processing example for a mosaic signal imaged by an imaging element having a general color filter array illustrated in Fig. 4. The present invention may be similarly applied to a mosaic image having another color array.


(7-5. Modified example of interpolation process of R and B)


In the color filter array illustrated in Fig. 4, the number of pixels of R and B is only a half of that of G. Accordingly, in the embodiment described above, as illustrated in Fig. 5, description is performed on a processing example in which the abovementioned interpolation process corresponding to the present invention is applied so that the number of pixels of R and B is to be firstly doubled to increase the number of the pixels of R and B to be the same as that of the G pixels and in which the interpolation process corresponding to the present invention is applied once again so that the number of pixels are further doubled by using the interpolated pixels of R and B.

Here, not limited to the interpolation processes divided in two times, the present invention may be applied so that the number of pixels is quadrupled at one time.

In the above, the present invention is described in detail with reference to the specific embodiments. Here, it is obvious that a person skilled in the art can perform modification and substitution of the embodiments without departing from the substance of the present invention. That is, the present invention is disclosed as a form of exemplification and is not supposed to be construed in a limited manner. Claims are supposed to be considered for determining the substance of the present invention.

Further, a series of processes described in the application can be performed with hardware, software, or combined configuration of the both. In a case of performing the processes with software, a program in which process sequence is recorded is executed as being installed in a memory in a computer which is assembled in dedicated hardware or is executed as being installed in a general-purpose computer which is capable of performing a variety of processes. For example, the program can be previously recorded in a recording medium. Other than installing to a computer from the recording medium, the program can be installed to a recording medium such as a built-in hard disk after being received via a network such as a local area network (LAN) and the internet.

Here, not limited to be performed in chronological order corresponding to the description, a variety of processes described in the application may be performed in parallel or separately in accordance with processing capability of an apparatus to perform the processes or as needed basis. Further, a system in the present application is a logical aggregation structure of a plurality of apparatuses and is not limited to an entity having apparatuses of the respective structures accommodated in a single chassis.


INDUSTRIAL APPLICABILITY


As described above, according to the structure of the embodiments of the present invention, it is possible to perform interpolation of a color mosaic image taken by a single-plate color imaging element. Interpolation values in which signals are sufficiently restored from a low frequency component to a high frequency component are generated at an edge part and interpolation values including noise corresponding to sensor noise characteristics are generated at a flat part. According to the processes, a visually preferable interpolation image is generated with occurrence of regular patterns prevented, for example.

Specifically, a color mosaic image generated through an imaging process by a single-plate color imaging element is input, estimation is performed for a pixel value low frequency component and a noise high frequency component corresponding to a pixel interpolation position, and calculation for a pixel value at the pixel interpolation position is performed by applying an addition result thereof. The edge-adaptive interpolation processing unit calculates a pixel value at the pixel interpolation position by using a pixel value of a reference pixel located in an edge direction. The blend processing unit calculates a final interpolation pixel value by blending the edge-adaptive interpolation pixel value and the addition result of the pixel value low frequency component and the noise high frequency component corresponding to the pixel interpolation position in accordance with the flatness at the pixel interpolation position. According to the processes, a visually preferable interpolation image is generated with occurrence of regular patterns prevented, for example.

REFERENCE SIGNS LIST

| | |
|---|---|
| 101 | Flat part detecting unit |
| 102 | Edge-adaptive interpolation processing unit |
| 103 | Low frequency component calculation processing unit |
| 104 | Noise estimating unit |
| 105 | Blend processing unit |
| 201 | Lens |
| 202 | Diaphragm |
| 203 | CCD image sensor |
| 204 | Correlated double sampling circuit |
| 205 | A/D converter |
| 206 | DSP block |
| 207 | Timing generator |
| 208 | D/A converter |
| 209 | Video encoder |
| 210 | Video monitor |
| 211 | CODEC |
| 212 | Memory |
| 213 | CPU |
| 214 | Input device |
| 301 | Statistic calculating unit |
| 302 | Flatness calculating unit 1 |
| 401 | Horizontal high frequency component calculating unit |
| 402 | Vertical high frequency component calculating unit |
| 403 | Flatness calculating unit 2 |
| 501 | High frequency component calculating unit |
| 502 | Flatness calculating unit 3 |
| 601 | Horizontal edge calculating unit |
| 602 | Vertical edge calculating unit |
| 603 | Horizontal interpolating unit |
| 604 | Vertical interpolating unit |
| 605 | Interpolation value selecting unit |
| 801 | High frequency component calculating unit |
| 802 | Random selecting unit |
| 901 | Noise generating unit |
| 902 | Noise high frequency component calculating unit |

**Claims**

1. An image processing apparatus, comprising:

a low frequency component calculation processing unit which receives input of a color mosaic image generated through an imaging process by a single-plate color imaging element and which calculates a pixel value low frequency component corresponding to a pixel interpolation position;
a noise estimating unit which receives input of the color mosaic image and which estimates a noise high frequency component corresponding to the pixel interpolation position; and
a blend processing unit which calculates a pixel value at the pixel interpolation position by applying an addition result of the pixel value low frequency component and the noise high frequency component corresponding to the pixel interpolation position.

2. The image processing apparatus according to claim 1, further comprising:

a flat part detecting unit which calculates flatness at the pixel interpolation position; and
an edge-adaptive interpolation processing unit which calculates a pixel value at the pixel interpolation position by using a pixel value of a reference pixel located in an edge direction,
wherein the blend processing unit calculates a pixel value at the pixel interpolation position by performing a blend process in which the flatness calculated by the flatness detecting unit is set as a blend ratio between the addition result of the pixel value low frequency component and the noise high frequency component corresponding to the pixel interpolation position and the pixel value calculated by the edge-adaptive interpolation unit.

3. The image processing apparatus according to claim 2, wherein the flat part detecting unit calculates flatness at the pixel interpolation position by performing comparison between a statistic indicating pixel value distribution in the vicinity of the pixel interpolation position and a previously-defined noise model.

4. The image processing apparatus according to claim 3, wherein the flat part detecting unit calculates the flatness at the pixel interpolation position by calculating a pixel value variance as the statistic indicating the pixel value distribution in the vicinity of the pixel interpolation position and comparing the variance with the previously-defined noise model.

5. The image processing apparatus according to claim 3, wherein the flat part detecting unit calculates the flatness at the pixel interpolation position by calculating a summation of difference absolute values between pixel value average and pixel values as the statistic indicating the pixel value distribution in the vicinity of the pixel interpolation position and comparing the summation with the previously-defined noise model.

6. The image processing apparatus according to claim 2, wherein the flat part detecting unit calculates flatness at the pixel interpolation position based on a difference between a horizontal high frequency component and a vertical high frequency component at a local region in the vicinity of the pixel interpolation position.

7. The image processing apparatus according to claim 2, wherein the flat part detecting unit calculates flatness at the pixel interpolation position based on a high frequency component at the pixel interpolation position.

8. The image processing apparatus according to claim 2, wherein the edge-adaptive interpolation processing unit calculates the pixel value at the pixel interpolation position with a linear interpolation process using the pixel value of the reference pixel located in the edge direction.

9. The image processing apparatus according to claim 1 or 2, wherein the noise estimating unit calculates the noise high frequency component at the pixel interpolation position as a value equal to a high frequency component at a pixel position in the vicinity of the interpolation pixel position.

10. The image processing apparatus according to claim 9, wherein the noise estimating unit calculates the noise high frequency component at the pixel interpolation position as a value equal to a high frequency component of a pixel selected at random from pixels in the vicinity of the interpolation pixel position.

11. The image processing apparatus according to claim 9, wherein the noise estimating unit calculates the noise high frequency component at the pixel interpolation position by using a noise model of the single-plate color imaging element.

12. The image processing apparatus according to any one of claims 1 to 11, wherein a process to calculate the pixel value at the pixel interpolation position through processes of the low frequency component calculation processing unit, the noise estimating unit, and the blend processing unit is performed on each of a plurality of colors included in the color mosaic image generated through the imaging process by the single-plate color imaging element.

**13.** The image processing apparatus according to any one of claims 1 to 11,
wherein a high frequency component is calculated for a color having pixel distribution with the highest density among a plurality of colors included in the color mosaic image generated through the imaging process by the single-plate color imaging element, and
an interpolation process is performed by using the calculated high frequency component as a high frequency component of another color.

**14.** An imaging apparatus, comprising:

an imaging unit including a single-plate color imaging element; and
an image processing unit which receives input of a mosaic image taken by the imaging unit and which performs the imaging process according to any one of claims 1 to 13.

**15.** An image processing method performed by an image processing apparatus, the method comprising:

a low frequency component calculation processing step in which a low frequency component calculation processing unit receives input of a color mosaic image generated through an imaging process by a single-plate color imaging element and calculates a pixel value low frequency component corresponding to a pixel interpolation position;
a noise estimating step in which a noise estimating unit receives input of the color mosaic image and estimates a noise high frequency component corresponding to the pixel interpolation position; and
a blend processing step in which a blend processing unit calculates a pixel value at the pixel interpolation position by applying an addition result of the pixel value low frequency component and the noise high frequency component corresponding to the pixel interpolation position.

**16.** A program for causing an image processing apparatus to perform an imaging process, comprising:

a low frequency component calculation processing step which causes a low frequency component calculation processing unit to receive input of a color mosaic image generated through an imaging process by a single-plate color imaging element and to calculate a pixel value low frequency component corresponding to a pixel interpolation position;
a noise estimating step which causes a noise estimating unit to receive input of the color mosaic image and to estimate a noise high frequency component corresponding to the pixel interpolation position; and
a blend processing step which causes a blend processing unit to calculate a pixel value at the pixel interpolation position by applying an addition result of the pixel value low frequency component and the noise high frequency component corresponding to the pixel interpolation position.

# FIG. 1

(1)

| R | G | R | G |
|---|---|---|---|
| G | B | G | B |
| R | G | R | G |
| G | B | G | B |

INTERPOLATION PROCESS (DEMOSAIC)

(2)

| R | R | R | R |
|---|---|---|---|
| R | R | R | R |
| R | R | R | R |
| R | R | R | R |

| G | G | G | G |
|---|---|---|---|
| G | G | G | G |
| G | G | G | G |
| G | G | G | G |

| B | B | B | B |
|---|---|---|---|
| B | B | B | B |
| B | B | B | B |
| B | B | B | B |

## FIG. 2

FIG. 3

# FIG. 4

| R | G | R | G | R | G | R |
|---|---|---|---|---|---|---|
| G | B | G | B | G | B | G |
| R | G | R | G | R | G | R |
| G | B | G | B | G | B | G |
| R | G | R | G | R | G | R |
| G | B | G | B | G | B | G |
| R | G | R | G | R | G | R |

FIG. 5

BEFORE APPLYING
PRESENT INVENTION

FIRST APPLICATION
OF PRESENT INVENTION

SECOND APPLICATION
OF PRESENT IN

*FIG. 6*

# FIG. 7

*FIG. 8*

```
                                        401
┌──────────────┐      ┌──────────────────┐          403
│              │      │    HORIZONTAL    │          ┌──────────────┐      ┌──────────────┐
│ G MOSAIC IMAGE│─────▶│  HIGH FREQUENCY  │─────────▶│   FLATNESS   │─────▶│   FLATNESS   │
│              │      │    COMPONENT     │          │ CALCULATING  │      │              │
└──────────────┘      │ CALCULATING UNIT │          │    UNIT 2    │      └──────────────┘
                      └──────────────────┘          └──────────────┘

                                        402
                      ┌──────────────────┐
                      │     VERTICAL     │
                      │  HIGH FREQUENCY  │
                      │    COMPONENT     │
                      │ CALCULATING UNIT │
                      └──────────────────┘
```

FIG. 9

FIG. 10

```
                                   ┌─ 601
                          ┌──────────────────┐
                          │    HORIZONTAL    │
                    ┌────→ │  EDGE AMOUNT     │──────────────┐
                    │      │   CALCULATING    │              │
                    │      │      UNIT        │              │
                    │      └──────────────────┘              │
                    │                 ┌─ 602                 │
                    │      ┌──────────────────┐              │
                    │      │    VERTICAL      │              │
                    │ ┌──→ │  EDGE AMOUNT     │────────┐     │
                    │ │    │   CALCULATING    │        │     │
                    │ │    │      UNIT        │        │     │
                    │ │    └──────────────────┘        │     │
  ┌ ─ ─ ─ ─ ─ ─ ┐   │ │               ┌─ 603           │     │
  │G MOSAIC IMAGE│──┤ │    ┌──────────────────┐        ↓     ↓
  └ ─ ─ ─ ─ ─ ─ ┘   │ │    │    HORIZONTAL    │     ┌──────────────┐     ┌ ─ ─ ─ ─ ─ ─ ┐
                    │ ├──→ │  INTERPOLATING   │───┐ │ INTERPOLATION│     │G INTERPOLATION│
                    │ │    │      UNIT        │   │ │    VALUE     │────→│   IMAGE 1    │
                    │ │    └──────────────────┘   └→│   SELECTING  │     └ ─ ─ ─ ─ ─ ─ ┘
                    │ │               ┌─ 604      ┌→│     UNIT     │  └─ 605
                    │ │    ┌──────────────────┐   │ └──────────────┘
                    │ │    │    VERTICAL      │   │
                    │ └──→ │  INTERPOLATING   │───┘
                    │      │      UNIT        │
                    └────→ └──────────────────┘
```

# FIG. 11

```
          ┌─────────┐
          │  START  │
          └─────────┘
               │
               ▼                    ⌒ S101
     ┌─────────────────────┐
     │   dH = |G5 − G6|    │
     │   dV = |G3 − G8|    │
     └─────────────────────┘
               │
               ▼                    ⌒ S102
  false    ╱─────────────╲    true
  ◄────────   dH > dV      ────────►
            ╲─────────────╱
      │                          │
      ▼        ⌒ S103            ▼        ⌒ S104
 ┌──────────────┐         ┌──────────────┐
 │       G5 + G6│         │       G3 + G8│
 │  Gc = ───────│         │  Gc = ───────│
 │          2   │         │          2   │
 └──────────────┘         └──────────────┘
      │                          │
      └───────────┬──────────────┘
                  ▼
          ┌─────────┐
          │   END   │
          └─────────┘
```

$dH = |G5 - G6|$

$dV = |G3 - G8|$

$dH > dV$

$Gc = \dfrac{G5 + G6}{2}$

$Gc = \dfrac{G3 + G8}{2}$

# FIG. 12

$$\begin{pmatrix} 0 & \dfrac{1}{32} & 0 & \dfrac{1}{32} & 0 \\ \dfrac{1}{32} & 0 & \dfrac{6}{32} & 0 & \dfrac{1}{32} \\ 0 & \dfrac{6}{32} & 0 & \dfrac{6}{32} & 0 \\ \dfrac{1}{32} & 0 & \dfrac{6}{32} & 0 & \dfrac{1}{32} \\ 0 & \dfrac{1}{32} & 0 & \dfrac{1}{32} & 0 \end{pmatrix}$$

*FIG. 13*

```
                    801                          802
┌─────────────┐  ┌──────────────┐  ┌──────────────┐  ┌──────────────┐
│             │  │HIGH FREQUENCY│  │              │  │ NOISE HIGH   │
│G MOSAIC IMAGE│─→│  COMPONENT   │─→│   RANDOM     │─→│ FREQUENCY    │
│             │  │CALCULATING UNIT│ │SELECTING UNIT│  │ COMPONENT    │
└─────────────┘  └──────────────┘  └──────────────┘  └──────────────┘
```

# FIG. 14

$$\begin{pmatrix} \dfrac{-1}{128} & 0 & \dfrac{-6}{128} & 0 & \dfrac{-1}{128} \\[2ex] 0 & \dfrac{-16}{128} & 0 & \dfrac{-16}{128} & 0 \\[2ex] \dfrac{-6}{128} & 0 & \dfrac{92}{128} & 0 & \dfrac{-6}{128} \\[2ex] 0 & \dfrac{-16}{128} & 0 & \dfrac{-16}{128} & 0 \\[2ex] \dfrac{-1}{128} & 0 & \dfrac{-6}{128} & 0 & \dfrac{-1}{128} \end{pmatrix}$$

# FIG. 15

*FIG. 16*

INTERPOLATION PIXEL POSITION

: SELECTION POSITION CANDIDATE

## FIG. 17

```
┌ ─ ─ ─ ─ ─ ┐         901              902      ┌ ─ ─ ─ ─ ─ ┐
                 ┌──────────┐      ┌──────────┐
 G MOSAIC IMAGE →│  NOISE   │─────→│NOISE HIGH│─────→ NOISE HIGH
                 │GENERATING│      │FREQUENCY │      FREQUENCY
                 │   UNIT   │      │COMPONENT │      COMPONENT
└ ─ ─ ─ ─ ─ ┘    └──────────┘      │CALCULATING│    └ ─ ─ ─ ─ ─ ┘
                                   │   UNIT   │
                                   └──────────┘
```

# FIG. 18

$$\begin{pmatrix} 0 & \dfrac{-1}{32} & 0 & \dfrac{-1}{32} & 0 \\[2mm] \dfrac{-1}{32} & 0 & \dfrac{-6}{32} & 0 & \dfrac{-1}{32} \\[2mm] 0 & \dfrac{-6}{32} & \dfrac{32}{32} & \dfrac{-6}{32} & 0 \\[2mm] \dfrac{-1}{32} & 0 & \dfrac{-6}{32} & 0 & \dfrac{-1}{32} \\[2mm] 0 & \dfrac{-1}{32} & 0 & \dfrac{-1}{32} & 0 \end{pmatrix}$$

# FIG. 19

$$
\begin{pmatrix}
\dfrac{1}{64} & 0 & \dfrac{6}{64} & 0 & \dfrac{1}{64} \\[6pt]
0 & 0 & 0 & 0 & 0 \\[6pt]
\dfrac{6}{64} & 0 & \dfrac{36}{64} & 0 & \dfrac{6}{64} \\[6pt]
0 & 0 & 0 & 0 & 0 \\[6pt]
\dfrac{1}{64} & 0 & \dfrac{6}{64} & 0 & \dfrac{1}{64}
\end{pmatrix}
\quad
\begin{pmatrix}
0 & \dfrac{1}{16} & 0 & \dfrac{1}{16} & 0 \\[6pt]
0 & 0 & 0 & 0 & 0 \\[6pt]
0 & \dfrac{6}{16} & 0 & \dfrac{6}{16} & 0 \\[6pt]
0 & 0 & 0 & 0 & 0 \\[6pt]
0 & \dfrac{1}{16} & 0 & \dfrac{1}{16} & 0
\end{pmatrix}
$$

$$
\begin{pmatrix}
0 & 0 & 0 & 0 & 0 \\[6pt]
\dfrac{1}{16} & 0 & \dfrac{6}{16} & 0 & \dfrac{1}{16} \\[6pt]
0 & 0 & 0 & 0 & 0 \\[6pt]
\dfrac{1}{16} & 0 & \dfrac{6}{16} & 0 & \dfrac{1}{16} \\[6pt]
0 & 0 & 0 & 0 & 0
\end{pmatrix}
\quad
\begin{pmatrix}
0 & 0 & 0 & 0 & 0 \\[6pt]
0 & \dfrac{1}{4} & 0 & \dfrac{1}{4} & 0 \\[6pt]
0 & 0 & 0 & 0 & 0 \\[6pt]
0 & \dfrac{1}{4} & 0 & \dfrac{1}{4} & 0 \\[6pt]
0 & 0 & 0 & 0 & 0
\end{pmatrix}
$$

## FIG. 20

$$\begin{pmatrix} \dfrac{-1}{256} & \dfrac{-4}{256} & \dfrac{-6}{256} & \dfrac{-4}{256} & \dfrac{-1}{256} \\ \dfrac{-4}{256} & \dfrac{-16}{256} & \dfrac{-24}{256} & \dfrac{-16}{256} & \dfrac{-4}{256} \\ \dfrac{-6}{256} & \dfrac{-24}{256} & \dfrac{220}{256} & \dfrac{-24}{256} & \dfrac{-6}{256} \\ \dfrac{-4}{256} & \dfrac{-16}{256} & \dfrac{-24}{256} & \dfrac{-16}{256} & \dfrac{-4}{256} \\ \dfrac{-1}{256} & \dfrac{-4}{256} & \dfrac{-6}{256} & \dfrac{-4}{256} & \dfrac{-1}{256} \end{pmatrix}$$

## INTERNATIONAL SEARCH REPORT

| | International application No. |
|---|---|
| | PCT/JP2011/060660 |

A. CLASSIFICATION OF SUBJECT MATTER
*H04N9/07*(2006.01)i

According to International Patent Classification (IPC) or to both national classification and IPC

B. FIELDS SEARCHED

Minimum documentation searched (classification system followed by classification symbols)
H04N9/07

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-072233 A  (Olympus Corp.),<br>27 March 2008 (27.03.2008),<br>entire text; all drawings<br>& US 2009/0219416 A1    & WO 2008/032610 A1 | 1-16 |
| A | JP 2009-020605 A  (Olympus Corp.),<br>29 January 2009 (29.01.2009),<br>entire text; all drawings<br>& US 2010/0111409 A1    & WO 2009/008430 A1 | 1-16 |
| A | JP 10-210323 A  (Matsushita Electric Industrial<br>Co., Ltd.),<br>07 August 1998 (07.08.1998),<br>entire text; all drawings<br>(Family: none) | 1-16 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 July, 2011 (27.07.11) | 09 August, 2011 (09.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

### Patent documents cited in the description

- US P4642678 A
- US P5652621 A
- JP 7236147 A
- JP 2008263465 A
- JP 2007028348 A
- JP 2004304658 A
- US 4642678 A
- US 5652621 A

### Non-patent literature cited in the description

- **K. IRIE et al.** A model for measurement of noise in CCD digital-video cameras. *Meas. Sci. Technol.,* 2008, vol. 19
- **H. TIAN.** Noise Analysis in CMOS Image Sensors. *Ph. D Thesis,* 2000
- **KAZUYA YONEMOTO.** Foundation and application of CCD/CMOS image sensor. CQ publishing CO., Ltd, 2003
- **A. BOSCO.** Signal dependent raw image denoising using sensor noise characterization via multiple acquisitions. *IS&T/SPIE Electronic Imaging,* 2010